Europäisches Patentamt

(19) European Patent Office

Office européen des brevets

(11) Publication number: **0 207 919 B1**

# EUROPEAN PATENT SPECIFICATION

(45) Date of publication of patent specification:
09.01.91 Bulletin 91/02

(51) Int. Cl.⁵: **B62D 27/06**

(21) Application number: **86850241.0**

(22) Date of filing: **04.07.86**

(54) Device in load benches.

(30) Priority: **05.07.85 SE 8503364**

(43) Date of publication of application:
**07.01.87 Bulletin 87/02**

(45) Publication of the grant of the patent:
**09.01.91 Bulletin 91/02**

(84) Designated Contracting States:
**AT BE CH DE FR LI**

(56) References cited:
**DE-A- 1 455 895**
**DE-A- 2 816 579**

(73) Proprietor: **ExTe Fabriks AB**
**Box 39**
**S-820 41 Färila (SE)**

(72) Inventor: **Kjell, Jonsson**
**Kyrkstugevägen 47**
**S-827 00 Ljusdal (SE)**

(74) Representative: **Westerlund, Christer et al**
**L.A. Groth & Co Patentbyra AB**
**Västmannagatan43**
**S-113 25 Stockholm (SE)**

Jouve, 18, rue Saint-Denis, 75001 PARIS

## Description

### Technical Field

The present invention relates to a device in load benches provided with posts, the structure forming the bench being mounted on a vehicle and extending substantially at right angles to the travelling direction of the vehicle, the device being intended for removably locking a post in a sleeve on the bench, while the post is held in position by an abutment on the bench, and including an elastic vibration damper between the post and bench, as well as a means for compressing the damper.

### Background Art

Devices of the kind mentioned above are known in the art, e.g. from the Swedish published specifications SE-B-437 494 (Application N° SE-A-8300552-0) and SE-B-386 858 (Application N° SE-A-7510104-8). In the former reference, the device is designed such that the post must be swung during its insertion in a pocket in the bench structure and that during travel the post can unintentionally be displaced upwards in the pocket, if the compression means is insufficiently tightened, or if the stop plate welded to the lower end of the post has fallen off. In the device described in the latter reference, the post will fall to the ground if the compression means is not tightened, or has been shifted out of its locking position or if the elastic member is worn.

### Disclosure of Invention

One object of this invention is to remove the disadvantages burdening previously known devices and to provide a device which is simple to fit and dismantle, and which also ensures that the post cannot be unintentionally removed from the bench.

This object is achieved by the device in accordance with the invention being given the distinguishing features disclosed in the characterising portions of the independant claim.

### Description of Figure

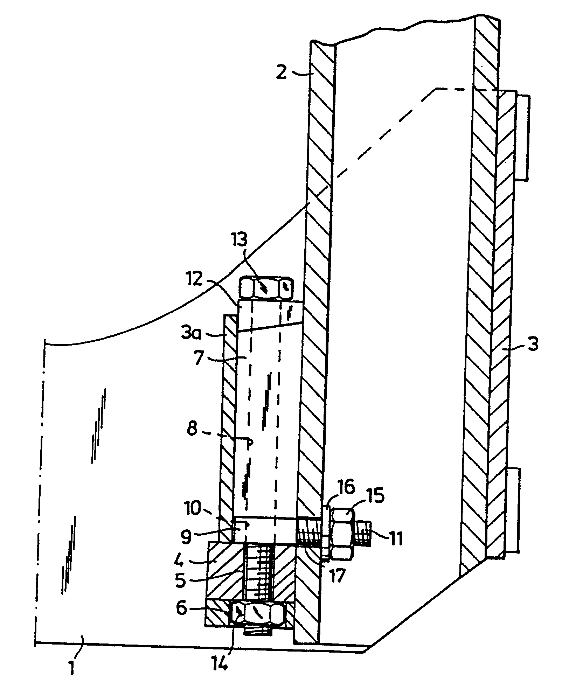

The sole Figure on the drawing is a sectional side view of a device in accordance with the invention.

### Preferred Embodiment

In the Figure there is illustrated a portion of a load bench structure 1 including a horizontal box beam, intended to be mounted on a truck, trailer or the like. A vertical post 2 is mounted vertically and removably attachable to one end of the bench 1.

The post 2, which is of the square tube type, is inserted in a sleeve 3, made in the structure of the bench 1, and is open upwards and downwards. The sleeve 3 comprises four vertical side walls mutually spaced from each other such that three of the walls of the post just have clearance to those of the sleeve, while the fourth wall of the post is at a comparatively large distance from the wall 3a transverse the bench.

The side walls of the sleeve 3 parallel to the extension of the bench, and the wall of the post 2 facing away from the end of the bench form a pocket having an abutment 4 as its bottom, the abutment being welded to the bench and provided with a through hole 5 and a recess 6. An essentially parallelepipedic rubber block 7 with a central through hole 8 fits into the pocket above a flat holder 9 resting on the abutment and provided with a circular hole 10 and a threaded stud 11. A steel bearing washer 12 has its sloping bottom surface mating with an upper sloping surface of the block.

A bolt 13 is inserted through the washer 12, block 7, holder 9 and abutment 4. The bolt head engages against the washer, while the threaded end of the bolt is screwed into a nut 14 unrotatably retained by the recess 6.

The stud 11 projects through a hole 17 in a wall of the post 2. A lock washer is placed onto the stud and a nut 15 is then screwed therein for engaging against the post via the washer 16.

Before fitting the post 2 to the bench 1, the bearing washer 12 is put in place on the block 7 and the latter on the holder 9, subsequent to which the bolt 13 is passed through these items. The stud 11 is then inserted in the hole 17 in the post and the nut 15 tightened via the washer 16. The unit formed by the parts 2, 13, 12, 7, 9, 11, 15, 16 is now inserted into the sleeve 3, ensuring at the same time that the bolt 13 passes into the hole 5 in the abutment 4, so that it may be screwed into the nut 14 in the recess 6. When the bolt is tightened down with the aid of a suitable tool, the block 7 is compressed vertically and expands horizontally. This results in that the block is urged against the wall 3a and the wall of the post, screwing the nut ceasing when sufficient friction has been obtained via the block between the post and the wall 3a as well as between the post and the sleeve wall opposite the wall 3a. The engaging surfaces are relatively large, thus ensuring good retention of the post relative the bench. In addition, the engagement is elastic, which prevents the post from vibrating and rattling in the sleeve and the bolt 13 from thus becoming unthreaded from the nut 14. By the sloping, mating surfaces on the bearing washer 12 and block 7 there is also achieved that the upper part of the block is pressed laterally against the post, resulting in a larger bearing pressure being obtained over a relatively small area, in addition to the extended surface pressure the block otherwise exerts against the post.

The post 2 is dismantled from the bench by first screwing the bolt 13 free from the nut 14 and then lifting the post 2 and parts 13, 12, 7, 9, 11, 15 and 16 out of the sleeve 3.

It will be understood that the invention is not restricted to the embodiment described above and illustrated on the drawing, but only by the disclosures in the claims.

## Claims

1. A device in substantially horizontal load benches provided with substantially upright posts, the structure forming the bench being mounted on a vehicle and extending substantially at right angles to the travelling direction of the vehicle, the device being intended for removably locking a post (2) in a sleeve (3, 3a) on the bench (1), while the post is held in position by an abutment (4) on the bench (1), and including an elastic vibration damper (7) between the post (2) and sleeve (3, 3a), as well as a means (13, 14) for compressing the damper (7), characterized by a holder (9) projecting from the post (2) above the abutment (4) and attacting the vibration damper and compression means to the post, the post with its holder (9) and the vibration damper (7) being fastened to the abutment by the compression means (13, 14).

2. Device as claimed in claim 1, characterized in that the holder (9) is clamped between the vibration damper (7) and the abutment (4) and/or the compression means (13, 14).

3. Device as claimed in claim 1 or 2, characterized in that the holder (9) has an actuable member (15) accessible from the inside of the post.

4. Device as claimed in any one of the preceding claims, characterized in that the holder (9) is provided with a cutout, suitably implemented as a hole (10), through which projects a part (13) of the compression means (13, 14).

5. Device as claimed in any one of the preceding claims, characterized in that there is a member (12) between the vibration damper (7) and the compression means (13, 14) for displacing a portion of the damper towards the post (2) on tightening the compression means.

6. Device as claimed in claim 5, characterized in that said member (12) and the damper (7) have mating surfaces forming an angle deviating from a right angle to the compressing direction of the compression means (13, 14).

## Ansprüche

1. Vorrichtung bei im wesentlichen horizontalen Lastenträgern mit im wesentlichen aufrechten Rungen, wobei der den Träger bildende konstruktionsteil auf einem Fahrzeug montiert ist und sich im wesentlichen rechtwinkelig zur Fahrtrichtung des Fahrzeuges erstreckt, welche Vorrichtung zur lösbaren Verriegelung einer Runge (2) in einer Hülse (3, 3a) auf dem Träger (1) ausgebildet ist, wobei die Runge durch ein Widerlager (4) auf dem Träger (1) in ihrer Lage gehalten wird, und einen elastischen Schwingungsdämpfer (7) zwischen der Runge (2) und der Hülse (3, 3a) sowie ein Organ (13, 14) zum Zusammenpressen des Dämpfers (7) umfaßf, gekennzeichnet durch einen Halter (9), der oberhalb des Widerlagers (4) von der Runge (2) vorragt und den Schwingungsdämpfer sowie das Preßorgan mit der Runge verbinder, wobei die Runge mit ihrem Halter (9) und dem Schwingungsdämpfer (7) durch das Preßorgan (13, 14) am Widerlager befestigt ist.

2. Vorrichtung nach Patentanspruch 1, dadurch gekennzeichnet, daß der Halter (9) zwischen dem Schwingungsdämpfer (7) und dem Widerlager (4) und/oder dem Preßorgan (13, 14) eingeklemmt ist.

3. Vorrichtung nach Patentanspruch 1 oder 2, dadurch gekennzeichnet, daß der Halter (9) ein von der Innenseite der Runge zugängliches Betätigungselement (15) aufweist.

4. Vorrichtung nach einem der vorhegehenden Patentansprüche, dadurch gekennzeichnet, daß der Halter (9) mit einem zweckmäßigerweise als Loch (10) ausgebildeten Ausschnitt versehen ist, durch welchen ein Teil (13) des Preßorganes (13, 14) ragt.

5. Vorrichtung nach einem der vorhergehenden Patentansprüche, dadurch gekennzeichnet, daß zwischen dem Schwingungsdämpfer (7) und dem Preßorgan (13, 14) ein Organ (12) zur Verschiebung eines Abschnittes des Dämpfers zur Runge (2) hin beim Festziehen des Preßorgans angeordnet ist.

6. Vorrichtung nach Patentanspruch 5, dadurch gekennzeichnet, daß das Organ (12) und der Dämpfer (7) zusammenpassende Flächen aufweisen, die einen vom rechten Winkel zur Druckrichtung des Preßorgans (13, 14) abweichenden Winkel bilden.

## Revendications

1. Dispositif pour plateaux de chargement sensiblement horizontaux pourvus de montants sensiblement verticaux, la structure formant le plateau de chargement étant montée sur un véhicule et s'étendant sensiblement à angle droit par rapport à la direction du trajet du véhicule, le dispositif étant conçu pour bloquer un montant (2) de manière amovible dans un manchon (3, 3a) sur le plateau de chargement (1), tandis que le montant est maintenu en position par une butée (4) sur le plateau de chargement (1), et incluant un amortisseur de vibrations élastique (7) entre le montant (2) et un manchon (3, 3a), ainsi que des moyens (13, 14) pour comprimer l'amortisseur (7), caractérisé par un dispositif de maintien (9) s'avançant depuis le montant (2) au-dessus de la butée (4) et fixant l'amortisseur de vibrations et des moyens de compression au montant, le montant et son dispositif de maintien (9) ainsi que l'amortisseur de vibrations (7) étant fixés à la butée par les moyens de compression (13, 14)).

2. Dispositif selon la revendication 1, caractérisé en ce que le dispositif de maintien (9) est serré entre l'amortisseur de vibrations (7) et la butée (4) et/ou les moyens de compression (13, 14).

3. Dispositif selon la revendication 1 ou 2, caractérisé en ce que le dispositif de maintien (9) comporte un élément actionnable (15) accessible depuis l'intérieur du montant.

4. Dispositif selon l'une des revendications précédentes, caractérisé en ce que le dispositif de maintien (9) est pourvu d'une ouverture, ayant avantageusement la forme d'un trou (10), à travers lequel s'avance une partie (13) des moyens de compression (13, 14).

5. Dispositif selon l'une des revendications précédentes, caractérisé en ce qu'il est prévu un organe (12) entre l'amortisseur de vibrations (7) et les moyens de compression (13, 14) pour déplacer une partie de l'amortisseur en direction du montant (2) lorsque les moyens de compression sont resserrés.

6. Dispositif selon la revendication 5, caractérisé en ce que ledit organe (12) et l'amortisseur (7) ont des surfaces d'accouplement formant un angle différent d'un angle droit avec la direction de compression des moyens de compression (13, 14).